# EUROPÄISCHE PATENTSCHRIFT

(11) **EP 2 024 144 B1**
(45) Veröffentlichungstag und Bekanntmachung des Hinweises auf die Patenterteilung: **25.01.2012**
(21) Anmeldenummer: 07724820.1
(22) Anmeldetag: 03.05.2007
(51) Int. Cl.: B25J 15/00, B25J 9/00, B25J 19/00

(54) **ROBOTERHAND-ANTRIEBSVORRICHTUNG**
DRIVE DEVICE FOR A ROBOTIC HAND
DISPOSITIF D'ENTRAÎNEMENT DE MAIN DE ROBOT

(30) Priorität: 12.05.2006 DE 102006022648
(43) Veröffentlichungstag der Anmeldung: 18.02.2009
(73) Patentinhaber: KUKA Roboter GmbH, 86165 Augsburg (DE)
(72) Erfinder: KRUMBACHER, Rainer, 87675 Rettenbach (DE); MARKERT, Joachim, 86167 Augsburg (DE)
(74) Vertreter: Patentanwälte Funk & Böss GbR
(86) Internationale Anmeldenummer: PCT/EP2007/003894
(87) Internationale Veröffentlichungsnummer: WO 2007/131639

(56) Entgegenhaltungen:
- EP-A2- 0 950 476
- DE-A1- 3 730 873
- IT-B- 1 238 279
- US-A- 4 671 732
- US-A- 4 821 594
- US-A1- 2004 103 740
- US-B1- 6 244 644

## Beschreibung

Die Erfindung betrifft einen Roboter mit einer Roboterhand-Antriebsvorrichtung, die mehrere, insbesondere drei in einem Ausleger des Roboters angeordnete Antriebsmotoren zum Antreiben einer Roboterhand des Auslegers aufweist.

Die Antriebsmotoren sind dabei in der Regel in einer Reihe nebeneinander angeordnet. Die Reihe, in der die Antriebsmotoren angeordnet sind, verläuft senkrecht zu den Drehachsen der Antriebsmotoren bzw. zu den Antriebswellen. In einem Ausleger eines Roboters angeordnete Antriebsmotoren können auch fächerartig angeordnet sein und mit in Richtung des Endes von Koaxialwellen zusammenlaufenden Zwischenwellen ausgestattet sein und letztlich die Roboterhand antreiben. Derartige Anordnungen benötigen einen großen Platzbedarf. Auch ist bei zueinander laufenden Wellen, wie im genannten Fall, der Winkel der Achsen relativ groß.

Ferner sind gattungsgemäße Roboterhand-Antriebsvorrichtungen bekannt, deren Motoren jeweils eine Gelenkwelle oder ein Element einer Hohlwelle antreiben.

Die US 4,671,732 offenbart beispielsweise Antriebswellen, die als Hohlwellen ausgebildet sind, die koaxial zueinander angeordnet sind. Darüber hinaus sind die dortigen Motoren des Auslegers in derselben Ebene angeordnet.

Schließlich sind Roboterhand-Antriebsvorrichtungen bekannt, in denen wenigstens einer der Antriebsmotoren zum Antreiben der Roboterhand in der Roboterhand selbst angeordnet ist, was zu einem hohen Eigengewicht der Roboterhand und damit zu einer Reduktion der Nutzlast der Roboterhand führt.

Die US 4,671,732 beschreibt beispielsweise Antriebswellen, die als Hohlwellen ausgebildet sind, die koaxial zueinander angeordnet sind. Darüber hinaus sind die dortigen Motoren des Auslegers in derselben Ebene angeordnet.

Die EP 1 352 720 A1 beschreibt ein Antriebsanordnung einer Roboterhand mit zwei parallel verlaufenden Wellen. Die Wellen sind antriebsseitig an Getriebe angekoppelt, die ihrerseits von Antriebsmotoren angetrieben werden.

Die JP 06078425 A beschreibt einen Roboter, bei dem ein Antriebsmotor gegenüber einem weiteren Antriebsmotor in axialer Richtung versetzt angeordnet ist, wobei an die Antriebsmotoren Gelenkwellen angeschlossen sind.

Die EP 1 886 773 A1 zeigt einen Roboterarm mit einem ersten Antriebsmotor, der gegenüber einem zweiten Antriebsmotor in axialer Richtung auf eine Roboterhand nach vorne zu versetzt angeordnet ist, wobei zwei Antriebswellen als parallel zueinander verlaufende Geradwellen ausgebildet sind.

Der Erfindung liegt unter Vermeidung der genannten Nachteile insbesondere die Aufgabe zugrunde, den von einer gattungsgemäßen Roboterhand-Antriebsvorrichtung belegten Bauraum bei einer günstig ausbalancierten Schwerkraftverteilung zu reduzieren.

Zur Lösung dieser Aufgabe schlägt die Erfindung einen Roboter mit einer Roboterhand-Antriebsvorrichtung vor, die mehrere in einem Ausleger des Roboters angeordnete Antriebsmotoren mit Antriebswellen zum Antreiben einer Roboterhand des Auslegers aufweist, wobei wenigstens einer der Antriebsmotoren gegenüber wenigstens einem weiteren der Antriebsmotoren in axialer Richtung auf die Roboterhand zu versetzt angeordnet ist und die Antriebswellen als parallel zueinander verlaufende Geradwellen ausgebildet sind, die vorne im Wesentlichen auf gleicher axialer Höhe enden, wobei wenigstens drei Antriebswellen vorgesehen sind, die derart angeordnet sind, dass ein Abstand der Antriebswelle eines mittleren Antriebsmotors zu einer der Antriebswellen zweier seitlicher Antriebsmotoren geringer ist, als die Summe der Radien der Motorgehäuse eines benachbarten Paars der axial gegeneinander versetzten Antriebsmotoren.

In dieser Ausgestaltung ist somit vorgesehen, dass wenigstens einer der Antriebsmotoren um mindestens seine Länge axial gegenüber wenigstens einem weiteren Antriebsmotor versetzt ist.

Durch die erfindungsgemäße Lösung kann eine Gewichts- und Kostenersparnis erreicht werden. Darüber hinaus kann einerseits eine Bauraum sparende Roboterhand-Antriebsvorrichtung erreicht werden, und andererseits kann eine günstige Gewichtsverteilung der Motoranordnung in axialer Richtung bzw. in einer Längsrichtung des Auslegers gewährleistet werden, wodurch der Ausleger vorteilhaft ausbalanciert wird. Letztlich sind durch die Ausbalancierung des Auslegers Kosteneinsparungen in der Lagerung und im Antrieb des

Auslegers realisierbar, da hier geringere Kräfte wirken bzw. aufgebracht werden müssen.

Die Antriebsmotoren dienen dem Antrieb der drei Achsen einer Roboterhand, die als Zentralhand oder als eine andere, dem Fachmann sinnvoll erscheinende Roboterhand ausgebildet sein kann. Für spezielle Anwendungen sind redundante Roboterhände mit mehr als drei Antriebsmotoren oder auch eine Roboterhand mit nur zwei Antriebsmotoren denkbar. Auf diese beiden Ausnahmefälle ist der Erfindungsgedanke ohne weiteres übertragbar. Im Fall von mehr als drei Antriebsmotoren könnten diese in verschiedene Gruppen aufgeteilt sein, die jeweils auf unterschiedlichen axialen Höhen angeordnet sind, so dass Antriebsmotoren, die unterschiedlichen Gruppen angehören, gegeneinander versetzt sind.

Die erfindungsgemäße Lösung ermöglicht durch die dichtere Anordnung der Antriebswellen eine parallele Anordnung derselben und damit eine schmale Bauweise des Auslegers. Prinzipiell wäre die Erfindung jedoch auch auf fächerförmig bzw. auf einem Bogen angeordnete Antriebsmotoren mit strahlenförmig zusammenlaufenden Antriebswellen anwendbar, wobei hier ein bezogen auf eine einzelne Motorwelle axialer Versatz im Hinblick auf die gesamte Anordnung einem radialen Versatz eines der Antriebsmotoren aus einem Bogen, auf dem die weiteren Antriebsmotoren angeordnet sein können, entsprechen würde.

In bevorzugter Ausgestaltung ist vorgesehen, dass die Antriebswellen als insbesondere einstückige, d.h. aus einem Bauteil gefertigte Geradwellen ausgebildet sind. Dadurch kann eine besonders kostengünstige, wartungsfreundliche und verschleißarme Roboterhand-Antriebsvorrichtung geschaffen werden. Die vorgenannten Vorteile bestehen insbesondere im Vergleich zu den bisher üblichen Gelenkwellen oder Hohlwellen.

Eine bevorzugte Weiterbildung sieht darüber hinaus vor, dass wenigstens eine Antriebswelle an dem wenigstens einem an dem zu ihrem Antriebsmotor versetzten wenigstens einem Antriebsmotor vorbeigeführt ist.

Die Antriebsmotoren sind in axialer Richtung verschachtelt bzw. radialüberlappend angeordnet, wobei sie nicht in einer Ebene angeordnet sein müssen, sondern senkrecht zur Richtung ihrer Arbeitswellen zueinander versetzt angeordnet sein können. Durch die bei Blick in axialer Richtung überlappende Anordnung der Motorgehäuse kann eine Breite der gesamten Motoranordnung geringer ausfallen als die Summe der Breiten der Motorgehäuse der einzelnen Antriebsmotoren.

Die erfindungsgemäße Lösung ist insbesondere aufgrund der hier besonders relevanten Bauraumersparnis in erster Linie für Industrieroboter, beispielsweise für Knickarmroboter, einsetzbar, wobei prinzipiell auch andere Anwendungen, in welchen eine um mehrere Achsen bewegbare Roboterhand angesteuert werden muss, denkbar wären.

Als "Breite" des Motorgehäuses soll in diesem Zusammenhang eine Ausdehnung des Motorgehäuses transversal zu einer Drehachse der in dem Motorgehäuse gelagerten Motorwelle bezeichnet werden, und zwar insbesondere eine Ausdehnung in einer Richtung einer benachbarten Motorwelle bzw. eines benachbarten Antriebsmotors.

Eine derartige verschachtelte Anordnung ist dann gewährleistet, wenn bei Antriebsmotoren mit gleicher oder nahezu gleicher Breite ein Abstand der Antriebswellen zweier axial gegeneinander versetzter Antriebsmotoren geringer ist als die Breite des Motors, der durch axiales Versetzen neben der Welle des anderen Motors angeordnet ist.

Nach einer Weiterbildung der Erfindung wird vorgeschlagen, dass eine Breite eines Motorgehäuses eines mittleren Antriebsmotors, der zwischen zwei weiteren Antriebsmotoren angeordnet ist, geringer ist als die Breite eines Motorgehäuses wenigstens eines der weiteren Antriebsmotoren. Dadurch können die beiden seitlich neben dem mittleren Antriebsmotor angeordneten Antriebsmotoren bzw. deren Antriebswellen näher aneinander gerückt werden, so dass insgesamt eine schmalere Bauweise des Auslegers erreichbar ist.

Dies gilt insbesondere dann, wenn das mittlere Motorgehäuse wenigstens um die Länge der Motorgehäuse der weiteren Antriebsmotoren axial versetzt ist, und zwar insbesondere axial nach vorne. Dadurch wird eine Verschachtelung ohne eine Rücksicht auf eine Form des Motorgehäuses ermöglicht, wodurch handelsübliche Antriebsmotoren verwendet werden können.

Als "vorne" soll hier und im Folgenden eine Richtung bezeichnet werden, in welcher die von den Antriebsmotoren anzutreibende Roboterhand angeordnet ist.

Wenn, wie dies in einer weiteren vorteilhaften Ausgestaltung der Erfindung vorgeschlagen wird, wenigstens einer der weiteren Antriebsmotoren eine Antriebswelle antreibt, deren Länge dem Versatz des axial nach vorne versetzten Antriebsmotors entspricht, so dass eine Motorwelle des versetzten Antriebsmotors zumindest im Wesentlichen auf gleicher axialer Höhe endet wie die von dem weiteren Antriebsmotor angetriebene Antriebswelle, kann vorteilhaft eine Antriebswelle für den axial nach vorne versetzten Antriebsmotor entfallen, da dieser unmittelbar über seine Motorwelle an einem auf der axialen Höhe der Enden der weiteren Antriebswellen angeordneten Stirnradmechanismus arbeiten bzw. in ein Getriebe eingreifen kann.

Insofern sieht eine bevorzugte Ausgestaltung vor, dass ein gegenüber den anderen Motoren in Richtung der Roboterhand versetzte Motor am Getriebeeingang der 6. Achse des Roboters angeflanscht ist. Durch die Einsparung der Antriebswelle ist darüber hinaus auch die von dem axial nach vorne versetzten Antriebsmotor zu bewegende Last im Vergleich zu der Last der weiteren Antriebsmotoren geringer, so dass der axial nach vorne versetzte Antriebsmotor auch aus diesem Grund kleiner dimensioniert werden und demzufolge auch ein kleineres Motorgehäuse haben kann.

Eine symmetrische Anordnung und eine damit einher gehende Reduktion einer Bauteilvielfalt können erreicht werden, wenn der nach vorne oder hinten axial versetzte Antriebsmotor gegenüber zumindest zwei auf gleicher axialer Höhe angeordneten weiteren Antriebsmotoren versetzt ist. Ein weiterer Versatz eines Antriebsmotors transversal zur axialen Richtung und senkrecht zu der Reihe der weiteren Antriebsmotoren wäre zur weiteren Erhöhung der Packungsdichte der Antriebsmotoren denkbar.

Die Antriebsmotoren können den Ausleger bzw. ein Gewicht der Roboterhand oder ein Gewicht einer an der Roboterhand gehaltenen Applikation ausbalancieren, wenn zumindest eine Mehrheit der Antriebsmotoren als Gegengewicht auf einer der Roboterhand bezogen auf eine Drehachse des Auslegers gegenüberliegenden Seite des Auslegers angeordnet ist. Die maximale Nutzlast der Roboterhand kann durch eine solche Anordnung der Antriebsmotoren maximiert werden.

Weitere Vorteile ergeben sich aus der folgenden Figurenbeschreibung. Die Figuren zeigen Ausführungsbeispiele der Erfindung. Die Figuren, die Beschreibung und die Ansprüche enthalten zahlreiche Merkmale in Kombination, die der Fachmann auch einzeln betrachten und zu sinnvollen weiteren Kombinationen zusammenfassen wird.

Dabei zeigen:
- Fig. 1: ein erstes Ausführungsbeispiel einer erfindungsgemäßen Roboterhand-Antriebsvorrichtung, bei welcher ein mittlerer Antriebsmotor axial gegenüber zwei weiteren Antriebsmotoren versetzt angeordnet ist;
- Fig.2: ein alternatives Ausführungsbeispiel einer Roboterhand-Antriebsvorrichtung, bei welcher ein mittlerer Antriebsmotor axial gegenüber zwei weiteren Antriebsmotoren versetzt angeordnet ist und zudem ein kleineres Motorgehäuse aufweist;
- Fig. 3: ein weiteres Ausführungsbeispiel einer Roboterhand-Antriebsvorrichtung, bei welcher ein mittlerer Antriebsmotor axial nach vorne bis unmittelbar zu einem Getriebe versetzt angeordnet ist;
- Fig.4: einen Längsschnitt durch ein Ausführungsbeispiel eines Auslegers eines Roboters, wobei der Ausleger eine Roboterhand trägt und mit einer Antriebsvorrichtung für dieselbe ausgestattet ist, die im Wesentlichen dem Ausführungsbeispiel gemäß Fig. 3 entspricht; und
- Fig. 5: eine Seitenansicht eines gesamten Roboters mit dem Ausleger gemäß Fig. 4.

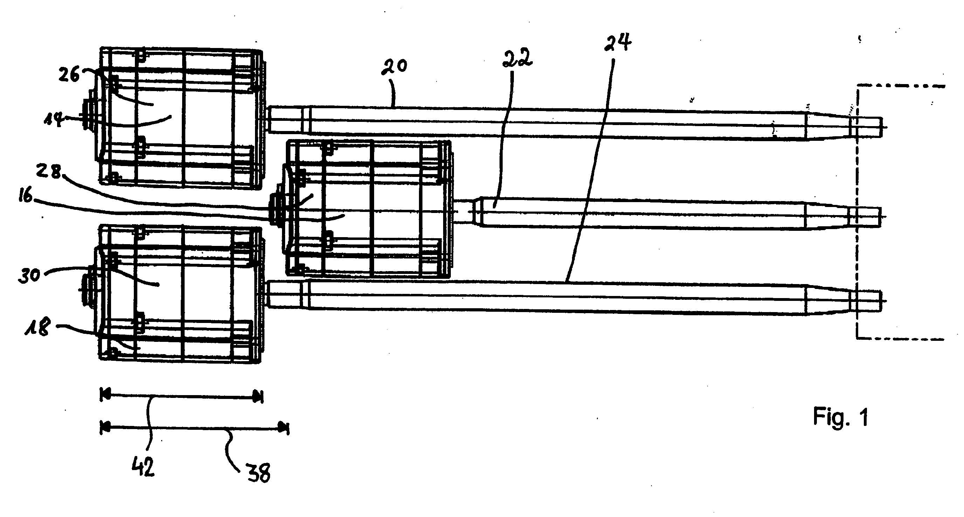

Figur 1 zeigt eine erste Ausführungsform einer erfindungsgemäßen Roboterhand-Antriebsvorrichtung mit drei in einem Ausleger (in Fig. 1 nicht dargestellt) eines Roboters (in Fig. 1 ebenfalls nicht dargestellt) angeordneten Antriebsmotoren 14, 16, 18 mit parallel verlaufenden Antriebswellen 20, 22, 24 zum Antreiben einer Roboterhand (in Fig. 1 ebenfalls nicht gezeigt) des Auslegers. Jede der Antriebswellen 20, 22, 24 ist auf eine Motorwelle des jeweiligen Antriebsmotors 14, 16, 18 aufgesteckt, so dass die Antriebswelle 20, 22, 24 über die Motorwelle im Motorgehäuse 26, 28, 30 des entsprechenden Antriebsmotors 14, 16, 18 gelagert ist.

Die Antriebswellen 20, 22, 24 sind als parallel zueinander verlaufende Geradwellen derart geführt, dass die Antriebswellen 20, 22 der zurückversetzten Motoren 14, 16 am nach vorne - d.h. auf die Hand des Roboters zu - versetzten Motor 16 vorbeigeführt sind.

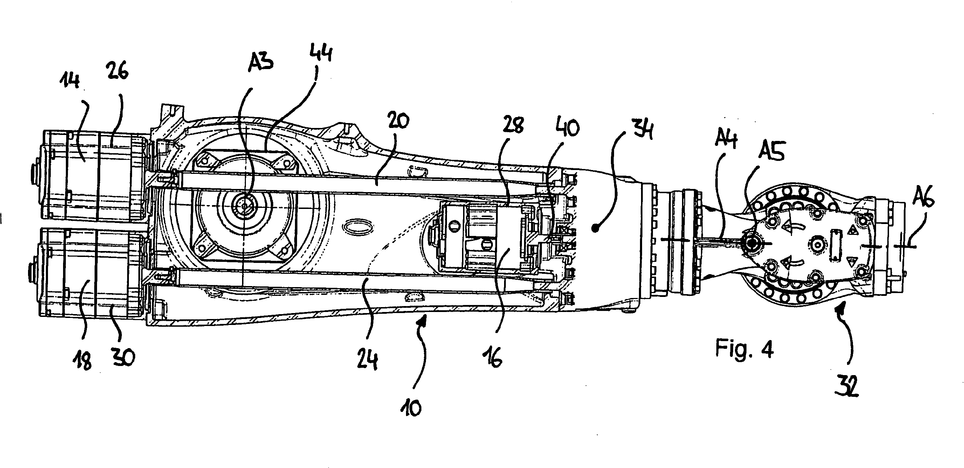

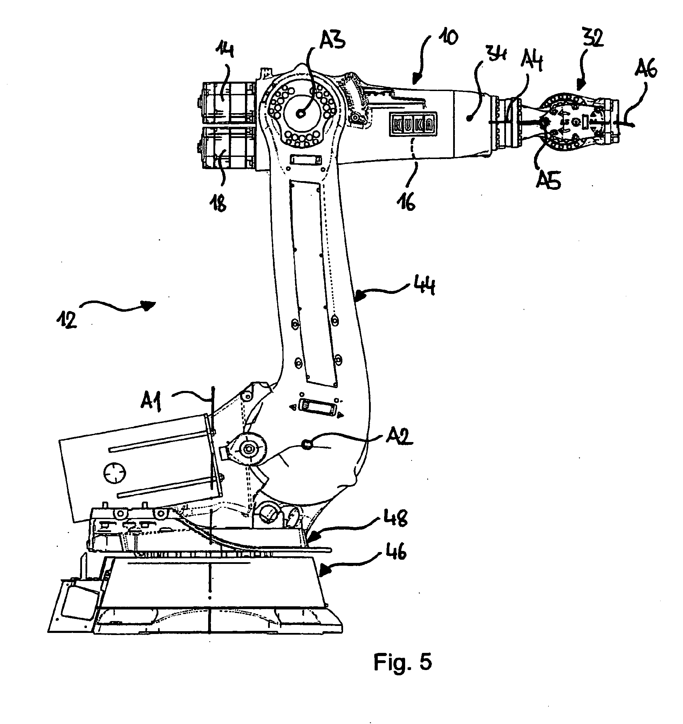

Die Roboterhand wird über ein Getriebe (in Fig. 1 nicht wiedergegeben) zum Übersetzen der Bewegungen der drei Antriebsmotoren 14, 16, 18 in Dreh- bzw. Schwenkbewegungen um drei sich im vorliegenden Ausführungsbeispiel in einem Punkt schneidende Drehachsen. Die Drehachsen charakterisieren die Freiheitsgrade der beweglichen Roboterhand bezogen auf den Ausleger. Da das Getriebe jede nur denkbare Ausgestaltung haben kann, beispielsweise mit Zahnriemen, Zahnrädern und/oder Stirnrädern ausgestattet sein kann, wird hier auf eine detaillierte Darstellung verzichtet. Im übrigen wird bezüglich einer möglichen Ausgestaltung des Auslegers bzw. des gesamten Roboters auf die weiter unten noch näher erläuterten Fig. 4 und 5 verwiesen.

Obwohl das Getriebe auch eine zwischengeschaltete Hohlwelle umfassen kann, die einen wesentlichen Teil einer Länge des Auslegers überbrückt, überbrücken die Antriebswellen 20, 24 einen Hauptteil, also wenigstens 50% der Länge des Auslegers.

Die den Antriebsmotoren 14, 16, 18 abgewandten Enden der Antriebswellen 20, 22, 24 sind im Getriebe gelagert bzw. auf Wellen desselben aufgesteckt, so dass auch auf dieser Seite auf ein separates Wellenlager verzichtet werden kann. Die Antriebswellen 20, 22, 24 sind daher als einstückige, einfache Geradwellen ausgebildet, besonders kostengünstig und bedürfen keiner eigenen Schmierung.

Der mittlere Antriebsmotor 16 treibt z.B. eine in der Richtung des Auslegers verlaufende Achse der Roboterhand an, wobei es sich bei dieser Achse z.B. um die als Achse Nr. 6 oder 6. Achse bezeichnete Achse eines sechsachsigen Industrieroboters handeln kann (siehe auch Fig. 5), welche der Drehung einer menschlichen Hand um eine entlang des Unterarms verlaufende Drehachse entspricht, während die beiden seitlich angeordneten Antriebsmotoren 14, 18 jeweils z.B. die 4. bzw. 5. Achse eines solchen Roboters, also z.B. eine senkrecht zu dieser Achse und senkrecht zu den beiden anderen Achsen verlaufende weitere Achse der Roboterhand antreiben können.

Der mittlere Antriebsmotor 16 ist erfindungsgemäß axial gegenüber zwei weiteren Antriebsmotoren 14, 18 nach vorne versetzt. Die beiden weiteren, seitlich angeordneten Antriebsmotoren 14, 18 sind axial auf gleicher Höhe angeordnet und haben parallel verlaufende Antriebswellen 20, 24.

Der mittlere Antriebsmotor 16 ist hier axial nach vorne (in Fig. 1 nach rechts), also in der Richtung der in Fig. 1 nicht im einzelnen dargestellten Roboterhand gegenüber den beiden seitlich angeordneten weiteren Antriebsmotoren 14, 18 versetzt angeordnet. Durch die erfindungsgemäße Lösung kann einerseits erreicht werden, dass eine Breite der Motoranordnung geringer ist als die Summe der Breiten der Motorgehäuse 26, 28, 30 der einzelnen Antriebsmotoren 14, 16, 18, andererseits kann eine günstige Gewichtsverteilung der Motoranordnung in axialer Richtung des Auslegers gewährleistet werden, wodurch der Ausleger 10 vorteilhaft ausbalanciert wird. Letztlich werden Kosteneinsparungspotenziale in der Lagerung und im Antrieb des Auslegers erreicht, da hier aufgrund des durch die Antriebsmotoren 14, 16, 18 bewirkten Gewichtsausgleichs geringere Kräfte wirken bzw. geringere effektive Lasten bewegt werden müssen.

Wie bereits erwähnt, kann der axial versetzte, mittlere Antriebsmotor 16 dabei die in der Richtung des Auslegers verlaufende 6. Achse der Roboterhand 32 antreiben. Diese Achse benötigt häufig geringere Drehmomente als die 4. und die 5. Achse des Roboters bzw. genauer: der Roboterhand. Auch durch die Zuordnung des mittleren Antriebsmotors 16 zu der gewöhnlich weniger belasteten 6. Achse kann dieser kleiner dimensioniert werden, so dass Kosten und Gewicht eingespart werden können.

Ein axialer Versatz 38 des gegenüber den beiden weiteren Antriebsmotoren 14, 18 versetzten Antriebsmotors 16 ist größer als eine Länge 42 der Motorgehäuse 26, 30 der weiteren Antriebsmotoren 14, 18, so dass die axialen Ausdehnungen des versetzten Antriebsmotors 16 und jeweils eines der beiden weiteren Antriebsmotoren 14, 18 sich nicht überlappen.

Ein Abstand der Antriebswellen 20, 22, 24 eines Paars von axial gegeneinander versetzten Antriebsmotoren 14, 16, 18, also ein Abstand der Antriebswelle 22 des mittleren Antriebsmotors 16 zu einer der Antriebswellen 20, 24 der seitlichen Antriebsmotoren 14, 18, ist geringer ist als die Breiten der beiden Motorgehäuse 26, 28, 30 des betrachteten Paars von Antriebsmotoren 14, 16 bzw. 16, 18 bzw. geringer als die Summe der Radien der Motorgehäuse 26, 28, 30 des betrachteten Paars von axial gegeneinander versetzten Antriebsmotoren 14, 16 bzw. 16, 18, so dass die Motorgehäuse 26, 28, 30 verschachtelt angeordnet sind und die Querschnitte der Motorgehäuse 26, 28, 30 in einer axialen Projektion überlappen.

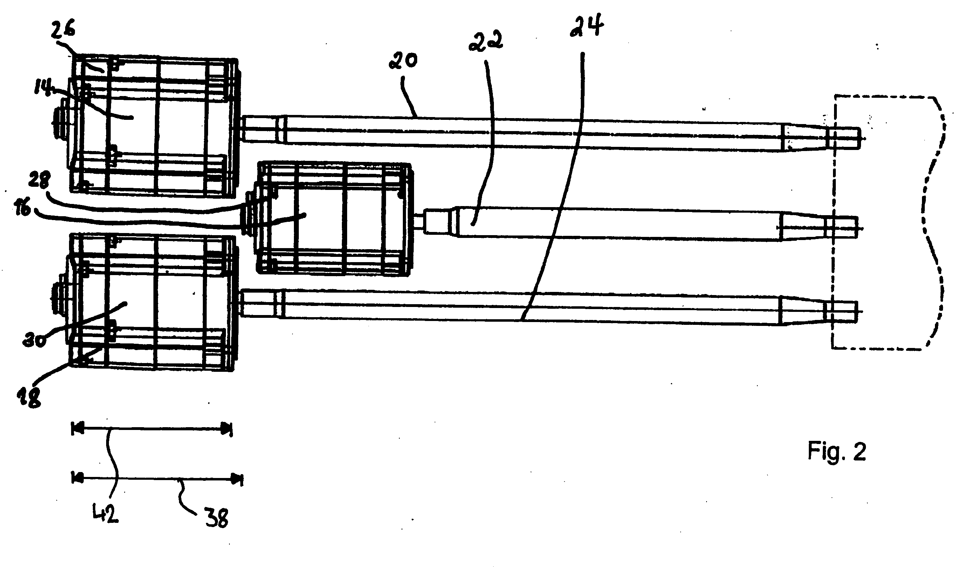

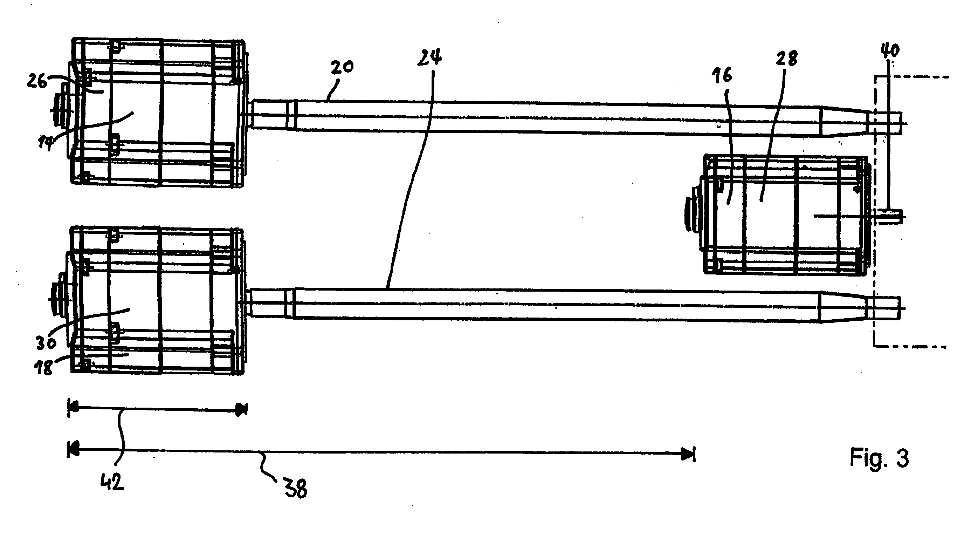

Die Figuren 2 und 3 zeigen weitere Ausführungsbeispiele der Erfindung. In der Beschreibung zu diesen Ausführungsbeispielen werden hauptsächlich Unterschiede zu der in Figur 1 dargestellten Roboterhand-Antriebsvorrichtung beschrieben, während im Hinblick auf gleich bleibende Merkmale auf die obige Beschreibug zu Figur 1 verwiesen wird. In den Figuren 2 und 3 sind jeweils analoge Merkmale mit denselben Bezugszeichen versehen.

Figur 2 zeigt ein alternatives Ausführungsbeispiel der Erfindung, in der ein mittlerer Antriebsmotor 16 gegenüber zwei weiteren Antriebsmotoren 14, 18 axial nach vorne versetzt ist und zudem ein kleineres Motorgehäuse 28 aufweist als die beiden weiteren Antriebsmotoren 14, 18. Demnach ist eine Breite des Motorgehäuses 28 des mittleren Antriebsmotors 16, der zwischen zwei weiteren Antriebsmotoren 14, 18 angeordnet ist und axial nach vorne versetzt ist, geringer als die jeweilige Breite der Motorgehäuse 26, 30 der beiden seitlich neben dem mittleren Antriebsmotor 16 angeordneten weiteren Antriebsmotoren 14, 18.

Figur 3 zeigt ein weiteres Ausführungsbeispiel der Erfindung, in welchem ein mittlerer Antriebsmotor 16 axial bis unmittelbar zum Getriebe 34 (Figur 1) versetzt ist, so dass die beiden seitlichen, weiteren Antriebsmotoren 14, 18 jeweils eine Antriebswelle 20, 24 antreiben, deren Länge einem Versatz 38 des versetzten, mittleren Antriebsmotors 16 entspricht, so dass eine Motorwelle 40 des nach vorne versetzten Antriebsmotors 16 zumindest im Wesentlichen auf gleicher axialer Höhe endet wie die von den weiteren Antriebsmotoren 14, 18 angetriebenen Antriebswellen 20, 24.

Bei allen vorgenannten Ausführungsbeispielen ist eine Mehrheit der Antriebsmotoren 14, 16, 18 als Gegengewicht auf einer der Roboterhand bezogen auf eine hier nicht explizit dargestellte Drehachse des Auslegers - im Falle eines sechsachsigen Industrieroboters also der 3. Achse (vgl. auch Fig. 5) - gegenüberliegenden Seite des Auslegers 10 angeordnet. Diese (3.) Drehachse befindet sich bei allen gezeigten Ausführungsbeispielen axial zwischen den Motorgehäusen 26, 30 der beiden äußeren Antriebsmotoren 14, 18 und dem Getriebe 34, wobei sie je nach der Bauart des die Roboterhand-Antriebsvorrichtung umfassenden Roboters 12 parallel zu der von den beiden Antriebswellen 20, 24 der äußeren Antriebsmotoren 14, 18 aufgespannten Ebene, senkrecht zu dieser Ebene oder prinzipiell auch schräg zu dieser Ebene verlaufen kann.

Gemäß weiteren, vorliegend nicht explizit dargestellten Ausführungsbeispielen ist einer der Antriebsmotoren gegenüber weiteren Antriebsmotoren, die in einer senkrecht zu ihren Drehachsen verlaufenden Reihe angeordnet sind, axial nach hinten, also von der Roboterhand fort versetzt.

Ferner ist es möglich, einen der Antriebsmotoren senkrecht zu einer von den Antriebswellen der weiteren Antriebsmotoren aufgespannten Ebene, in welcher auch die weiteren Antriebsmotoren in einer Reihe angeordnet sind, zu versetzen, also beispielsweise den mittleren Antriebsmotor 16 aus dem Figuren 1 bis 3 senkrecht zu der Bildebene der Figuren 1 bis 3 zu versetzen, wodurch wegen der Möglichkeit der dichteren Packung der Motorgehäuse 26, 28, 30 eine weitere Verkleinerung des Bauraums erzielt werden könnte.

In Figur 4 ist zur Veranschaulichung der Anordnung einer erfindungsgemäßen Roboterhand-Antriebsvorrichtung an einem Roboter ein Ausleger 10 eines im vorliegenden Fall sechsachsigen Industrieroboters (vgl. Fig. 5) wiedergegeben, welcher eine um drei Achsen, nämlich die 4. Achse A4, die fünfte Achse A5 und die sechste Achse A6 des Roboters, drehbare Roboterhand 32 trägt und mit einer Roboterhand-Antriebsvorrichtung ausgestattet ist, die im Wesentlichen der in Fig. 3 dargestellten Ausgestaltung entspricht. Der Ausleger 10 ist um die quer zu einer Schwinge 44 des Roboters verlaufende 3. Achse A3 drehbar, wobei die Motoren 14, 18 der 4. und 5. Achse A4, A5 der Roboterhand 32 an der dieser 3. Achse A3 abgewandten Seite der Roboterhand 32 angeordnet sind, während der die 6. Achse A6 der Roboterhand 32 antreibende - mittlere, mit Versatz bezüglich den Motoren 14, 18 angeordnete - Motor 16 zwischen der 3. Achse A3 und der Roboterhand 32 angeordnet ist. Die parallel verlaufenden Wellen 20, 24, 40 der Motoren 14, 16, 18 münden in ein nicht näher dargestelltes Getriebe 34, welches die jeweiligen Motordrehzahlen in geeigneter Weise übersetzt.

Figur 5 zeigt schließlich eine Gesamtansicht eines Roboters 12 in Form eines sechsachsigen Industrieroboters. Dieser ruht auf einem Sockel 46, auf dem ein Karussell 48 um eine vertikal angeordnete 1. Achse A1 drehbar ist. An dem Karussell 48 ist die Schwinge 44 um ein waagrechte 2. Achse A2 drehbar gelagert, welche die Schwinge 44 im Bereich ihres unteren Endes im Wesentlichen quer zu ihrer Erstreckungsrichtung durchsetzt. Im Bereich ihres der 2. Achse A2 entgegengesetzten Endes ist die Schwinge von der - ebenfalls waagrecht verlaufenden - 3. Achse A3 wiederum im Wesentlichen quer durchsetzt, wobei der Ausleger 10 um diese Achse A3 drehbar ist. Im Bereich des freien Endes des Auslegers 10 schließt sich schließlich die um drei Achsen A4, A5, A6 drehbare Roboterhand 32 an, welche durch die oben beschriebene, erfindungsgemäße Antriebsvorrichtung mit den von dem Ausleger 10 getragenen Motoren 14, 16, 18 betätigbar ist.

### Bezugszeichenliste

- 10: Ausleger
12 Roboter
- 14: Antriebsmotor
- 16: Antriebsmotor
- 18: Antriebsmotor
- 20: Antriebswelle
- 22: Antriebswelle
- 24: Antriebswelle
- 26: Motorgehäuse
- 28: Motorgehäuse
- 30: Motorgehäuse
- 32: Roboterhand
- 34: Getriebe
- 36: Achse
- 38: Versatz
- 40: Motorwelle
- 42: Länge
- 44: Schwinge
- 46: Sockel
- 48: Karussell

## Patentansprüche

1. Roboter mit einer Roboterhand-Antriebsvorrichtung, die mehrere in einem Ausleger (10) des Roboters (12) angeordnete Antriebsmotoren (14, 16, 18) mit Antriebswellen (20, 22, 24) zum Antreiben einer Roboterhand (32) des Auslegers (10) aufweist, wobei wenigstens einer der Antriebsmotoren (16) gegenüber wenigstens einem weiteren der Antriebsmotoren (14, 18) in axialer Richtung auf die Roboterhand (32) nach vorne zu versetzt angeordnet ist und die Antriebswellen (20, 22, 24) der Antriebsmotoren (14, 16, 18) als parallel zueinander verlaufende Geradwellen ausgebildet sind, die vorne im Wesentlichen auf gleicher axialer Höhe enden, **dadurch gekennzeichnet, dass** drei Antriebswellen (20, 22, 24) vorgesehen sind, die derart angeordnet sind, dass ein Abstand der Antriebswelle (22) eines mittleren Antriebsmotors (16) zu einer der Antriebswellen (20, 24) zweier seitlicher Antriebsmotoren (14, 18) geringer ist, als die Summe der Radien der Motorgehäuse (26, 28 bzw. 28, 30) eines benachbarten Paars der axial gegeneinander versetzten Antriebsmotore (14, 16 bzw. 16, 18).

2. Roboter nach Anspruch 1, **dadurch gekennzeichnet, dass** jede der Antriebswellen (20, 22, 24) auf eine Motorwelle des jeweiligen Antriebsmotors (14, 16, 18) aufgesteckt ist, so dass die Antriebswellen (20, 22, 24) über die Motorwellen im Motorgehäuse (26, 28, 30) des entsprechenden Antriebsmotors (14, 16, 18) gelagert sind.

3. Roboter nach Anspruch 1 oder 2, **dadurch gekennzeichnet, dass** die den Antriebsmotoren (14, 16, 18) abgewandten Enden der Antriebswellen (20, 22, 24) im Getriebe der Roboterhand (32) gelagert und/oder auf Wellen des Getriebes der Roboterhand (32) aufgesteckt sind.

4. Roboter nach einem der vorhergehenden Ansprüche **dadurch gekennzeichnet, dass** wenigstens einer der Antriebsmotoren (16) um mindestens seine Länge axial gegenüber wenigstens einem weiteren Antriebsmotor (14, 18) versetzt ist.

5. Roboter nach einem der vorhergehenden Ansprüche **dadurch gekennzeichnet, dass** bei Antriebsmotoren (14, 16, 18) mit gleicher oder nahezu gleicher Breite ein Abstand der Antriebswellen (20, 22, 24) zweier axial gegeneinander versetzter Antriebsmotoren (14, 16; 18, 16) geringer ist als die Breite des Antriebsmotors (16), der durch axiales Versetzen neben der Antriebswelle (20, 24) des anderen Antriebsmotors (14, 18) angeordnet ist.

6. Roboter nach einem der vorhergehenden Ansprüche, **dadurch gekennzeichnet, dass** eine Breite eines Motorgehäuses (28) eines Antriebsmotors (16), der zwischen zwei weiteren Antriebsmotoren (14, 18) angeordnet ist, geringer ist, als die Breite eines Motorgehäuses (26, 28, 30) wenigstens eines der weiteren Antriebsmotoren (14, 18).

7. Roboter nach einem der vorhergehenden Ansprüche, **dadurch gekennzeichnet, dass** wenigstens einer der weiteren Antriebsmotoren (14, 18) eine Antriebswelle (20, 24) antreibt, deren Länge dem Versatz (38) des versetzten Antriebsmotors (16) entspricht, so dass eine Motorwelle (40) des versetzten Antriebsmotors (16) zumindest im Wesentlichen auf gleicher axialer Höhe endet wie die von dem weiteren Antriebsmotor (14, 18) angetriebene Antriebswelle (20, 24).

8. Roboter nach einem der vorhergehenden Ansprüche, **dadurch gekennzeichnet, dass** der versetzte Antriebsmotor (16) gegenüber zumindest zwei auf gleicher axialer Höhe in einer Reihe nebeneinander angeordneten, weiteren Antriebsmotoren (14, 18) versetzt ist.

9. Roboter nach einem der vorhergehenden Ansprüche, **dadurch gekennzeichnet, dass** zumindest eine Mehrheit der Antriebsmotoren (14, 16, 18) als Gegengewicht auf einer der Roboterhand (32) bezogen auf eine Drehachse des Auslegers (10) gegenüberliegenden Seite des Auslegers (10) angeordnet ist.

10. Roboter nach einem der vorhergehenden Ansprüche, **dadurch gekennzeichnet, dass** ein gegenüber den anderen Antriebsmotoren (14, 18) in Richtung der Roboterhand (32) versetzte Antriebsmotor (16) am Getriebeeingang einer 6. Achse des Roboters angeflanscht ist.

## Claims

1. Robot with a robotic hand drive device, which comprises a plurality of drive motors (14, 16, 18) arranged in a cross-arm (10) of the robot (12) with drive shafts (20, 22, 24) for driving a robotic hand (32) of the cross-arm (10), wherein at least one of the drive motors (16) is arranged offset relative to at least one of the other drive motors (14, 18) in axial direction to the front towards the robotic hand (32), and the drive shafts (20, 22, 23) of the drive motors (14, 16, 18) are in the form of mutually parallel straight shafts which end at the front essentially at the same axial height, **characterised in that** three drive shafts (20, 22, 24) are provided which are arranged such that the distance of the drive shaft (22) of a middle drive motor (16) from one of the drive shafts (20, 24) of two lateral drive motors (14, 18) is smaller than the sum of the radii of the motor housing (26, 28 or 28, 30) of an adjacent pair of axially mutually offset drive motors (14, 16 or 16, 18).

2. Robot according to claim 1, **characterised in that** each of the drive shafts (20, 22, 24) is fitted onto a motor shaft of the respective drive motor (14, 16, 18) so that the drive shafts (20, 22, 24) are mounted via the motor shafts in the motor housing (26, 28, 30) of the corresponding drive motor (14, 16, 18).

3. Robot according to claim 1 or 2, **characterised in that** the ends of the drive shafts (20, 22, 24) facing away from the drive motors (14, 16, 18) are mounted in the gearbox of the robotic hand (32) and/or are fitted onto shafts of the gearbox of the robotic hand (32).

4. Robot according to any one of the preceding claims, **characterised in that** at least one of the drive motors (16) is offset axially by at least its length relative to at least one additional drive motor (14, 18).

5. Robot according to any one of the preceding claims, **characterised in that** in drive motors (14, 16, 18) with an identical or almost identical width the spacing of the drive shafts (20, 22, 24) of two axially mutually offset drive motors (14, 16; 18, 16) is smaller than the width of the drive motor (16) which is arranged in a axial movement next to the drive shaft (20, 24) of the other drive motor (14, 18).

6. Robot according to any one of the preceding claims, **characterised in that** the width of a motor housing (28) of a drive motor (16) which is arranged between two additional drive motors (14, 18) is smaller than the width of a motor housing (26, 28, 30) of at least one of the additional drive motors (14, 18).

7. Robot according to any one of the preceding claims, **characterised in that** at least one of the additional drive motors (14, 18) drives a drive shaft (20, 24), the length of which corresponds to the offset (38) of the offset drive motor (16), so that a motor shaft (40) of the offset drive motor (16) ends at least substantially at the same axial height as the drive shaft (20, 24) driven by the additional drive motor (14, 18).

8. Robot according to any one of the preceding claims, **characterised in that** the offset drive motor (16) is offset relative to at least two additional drive motors (14, 18) arranged at the same axial height in series next to one another.

9. Robot according to any one of the preceding claims, **characterised in that** at least the majority of the drive motors (14, 16, 18) are arranged as a counter weight on the side of the cross-arm (10) opposite the robotic hand (32) relative to an axis of rotation of the cross-arm (10).

10. Robot according to any one of the preceding claims, **characterised in that** a drive motor (16) which is offset relative to the other drive motors (14, 18) in the direction of the robotic hand (32) is flange-mounted onto the gearbox input of a 6^{th} axis of the robot.

## Revendications

1. Robot comportant un dispositif d'entraînement de main de robot, qui présente plusieurs moteurs d'entraînement (14, 16, 18) agencés dans un bras (10) du robot (12) avec des arbres d'entraînement (20, 22, 24) pour entraîner une main de robot (32) du bras (10), au moins un des moteurs d'entraînement (16) étant agencé avec décalage vers l'avant sur la main de robot (32) en direction axiale par rapport à au moins un autre des moteurs d'entraînement (14, 18), et les arbres d'entraînement (20, 22, 24) des moteurs d'entraînement (14, 16, 18) étant réalisés sous forme d'arbres droits s'étendant parallèlement les uns aux autres, qui se terminent à l'avant sensiblement à la même hauteur axiale, **caractérisé en ce qu'**il est prévu trois arbres d'entraînement (20, 22, 24) qui sont agencés de telle sorte qu'une distance de l'arbre d'entraînement (22) d'un moteur d'entraînement (16) médian par rapport à un des arbres d'entraînement (20, 24) de deux moteurs d'entraînement (14, 18) latéraux est plus faible que la somme des rayons du carter de moteur (26, 28 ou 28, 30) respectif d'une paire voisine des moteurs d'entraînement (14, 16 ou 16, 18) respectifs décalés axialement les uns par rapport aux autres.

2. Robot selon la revendication 1, **caractérisé en ce que** chacun des arbres d'entraînement (20, 22, 24) est enfiché sur un arbre de moteur du moteur d'entraînement (14, 16, 18) respectif de telle sorte que les arbres d'entraînement (20, 22, 24) sont montés par l'intermédiaire des arbres de moteur dans le carter de moteur (26, 28, 30) du moteur d'entraînement (14, 16, 18) correspondant.

3. Robot selon la revendication 1 ou 2, **caractérisé en ce que** les extrémités des arbres d'entraînement (20, 22, 24), qui sont détournées des moteurs d'entraînement (14, 16, 18), sont montées dans l'engrenage de la main de robot (32) et/ou enfichées sur des arbres de l'engrenage de la main de robot (32).

4. Robot selon l'une des revendications précédentes, **caractérisé en ce qu'**au moins un des moteurs d'entraînement (16) est décalé d'au moins sa longueur axialement par rapport à au moins un autre moteur d'entraînement (14, 18).

5. Robot selon l'une des revendications précédentes, **caractérisé en ce que** dans le cas de moteurs d'entraînement (14, 16, 18) de même largeur ou de largeur presque égale, une distance des arbres d'entraînement (20, 22, 24) de deux moteurs d'entraînement (14, 16 ; 16, 18) décalés axialement l'un par rapport à l'autre, est plus faible que la largeur du moteur d'entraînement (16) qui est agencé par décalage axial à côté de l'arbre d'entraînement (20, 24) de l'autre moteur d'entraînement (14, 18).

6. Robot selon l'une des revendications précédentes, **caractérisé en ce qu'**une largeur d'un carter de moteur (28) d'un moteur d'entraînement (16) qui est agencé entre deux autres moteurs d'entraînement (14, 18) est plus faible que la largeur d'un carter de moteur (26, 28, 30) d'au moins un des autres moteurs d'entraînement (14, 18).

7. Robot selon l'une des revendications précédentes, **caractérisé en ce qu'**au moins un des autres moteurs d'entraînement (14, 18) entraîne un arbre d'entraînement (20, 24) dont la longueur correspond au décalage (38) du moteur d'entraînement (16) décalé, de telle sorte qu'un arbre de moteur (40) du moteur d'entraînement (16) décalé se termine au moins sensiblement à la même hauteur axiale que l'arbre d'entraînement (20, 24) entraîné par l'autre moteur d'entraînement (14, 18).

8. Robot selon l'une des revendications précédentes, **caractérisé en ce que** le moteur d'entraînement (16) décalé est décalé par rapport au moins deux autres moteurs d'entraînement (14, 18) agencés l'un à côté de l'autre dans une rangée, à la même hauteur axiale.

9. Robot selon l'une des revendications précédentes, **caractérisé en ce qu'**au moins une majorité des moteurs d'entraînement (14, 16, 18) est agencée en tant que contrepoids sur un côté opposé du bras (10) par rapport à un axe de rotation du bras (10).

10. Robot selon l'une des revendications précédentes, **caractérisé en ce qu'**un moteur d'entraînement (16) décalé par rapport aux autres moteurs d'entraînement (14, 18) en direction de la main de robot (32) est bridé sur l'entrée d'engrainage d'un 6^{ème} axe du robot.
